## Europäisches Patentamt
## European Patent Office
## Office européen des brevets

(11) Veröffentlichungsnummer: **0 304 795 B1**

# EUROPÄISCHE PATENTSCHRIFT

(45) Veröffentlichungstag der Patentschrift: **09.12.92**

(21) Anmeldenummer: **88113390.4**

(22) Anmeldetag: **18.08.88**

(51) Int. Cl.5: **G01B 11/06**, G01N 21/89,
G01B 11/00, G01B 11/30

(54) **Vorrichtung zur Überprüfung von beschichteten und unbeschichteten Folien.**

(30) Priorität: **28.08.87 DE 3728705**

(43) Veröffentlichungstag der Anmeldung:
**01.03.89 Patentblatt 89/09**

(45) Bekanntmachung des Hinweises auf die
Patenterteilung:
**09.12.92 Patentblatt 92/50**

(84) Benannte Vertragsstaaten:
**DE FR GB IT**

(56) Entgegenhaltungen:
| | |
|---|---|
| EP-A- 0 211 654 | DE-A- 2 254 910 |
| DE-A- 2 724 919 | DE-A- 2 907 620 |
| DE-A- 2 909 400 | DE-A- 2 928 997 |
| DE-A- 2 935 716 | DE-A- 3 136 887 |
| DE-A- 3 149 709 | DE-A- 3 248 157 |
| DE-B- 1 623 196 | DE-B- 2 333 326 |
| DE-B- 2 355 185 | DE-U- 8 202 548 |
| US-A- 3 956 630 | |

ISA TRANSACTIONS, Band 27, Nr. 1, 1988,
Seiten 31-42, Research Triangle Park, NC,
US; P. Cielo et al.: "On-line electro-optical
instrumentation for continuous quality control of manufactured sheets"

(73) Patentinhaber: **BASF Magnetics GmbH**
**Dynamostrasse 3**
**W-6800 Mannheim 1(DE)**

(72) Erfinder: **Kreuzer, Erwin, Dipl.-Ing.**
**Goethering 56**
**W-8018 Grafing(DE)**
Erfinder: **Pontow, Harald**
**Geiselgasteigstrasse 48**
**W-8000 München 90(DE)**
Erfinder: **Zierl, Richard, Dr.**
**Flustrasse 21**
**W-8031 Eichenau(DE)**
Erfinder: **Zuckermayr, Alfred**
**Gerhart-Hauptmann-Ring 8**
**W-8000 München 83(DE)**

(74) Vertreter: **Münch, Volker et al**
**BASF Aktiengesellschaft Patentabteilung-C6**
**ZSP/A**
**W-6700 Ludwigshafen(DE)**

**ADVANCES IN INSTRUMENTATION, Band 42, Teil 3, 1987, Seiten 1601-1614, Research Triangle Park, NC, US; P. Cielo et al.: "On-line electro-optical instrumentation for continuous quality control of manufactured sheets"**

## Beschreibung

Die Erfindung betrifft eine Vorrichtung zur Überprüfung unbeschichteter oder beschichteter Schichtträger auf Oberflächen- und/oder Beschichtungsfehler mit opto-elektronischen Mitteln, bestehend aus einer Infrarotquelle, einem Fotoempfänger und einer Auswerteelektronik.

Bei der Herstellung fotografischer Materialien oder magnetischer Aufzeichnungsträger werden als Schichtträger vorzugsweise flexible Folien bestehend beispielsweise aus Cellulosetriacetat oder aus Polyethylenterephthalat verwendet. Dabei ist es erforderlich, die Folienbahnen sowohl vor als auch nach der Beschichtung auf Ebenheit und die Beschaffenheit ihrer Oberfläche zu überprüfen, da Schichtdickenschwankungen oder Oberflächenfehler bekannterweise sowohl die Aufzeichnungs- als auch die Wiedergabequalität der Aufzeichnungsträger erheblich beeinflussen. Derartige Kontrollen werden gewöhnlich stichprobenweise durchgeführt, beispielsweise Schichtdickenmessungen mit mechanischen Methoden oder Oberflächenuntersuchungen mit interferenzoptischen Methoden.

In den DE-OS 27 24 919, 29 09 400, 29 35 716, 31 49 709 und 32 48 157 wird Infrarotlicht zur Schichtdickenmessung verwendet, entweder durch Transmissions- oder Reflexions- oder Interferenzmessung. Die DE 16 23 196 schlägt polarisiertes Infrarotlicht vor. Die DE 31 36 887 benutzt eine Interferometeranordnung als Meßmethode. In der DE 29 07 620 wird vorgeschlagen, der zu messenden Schicht einen fluoreszierenden Stoff beizumischen und dann das Fluoreszenzlicht als Maß für die Schichtdicke zu messen. In der DE 23 33 326 wird das Meßlicht in einer Anzahl von Lichtbündeln aufgespalten, die eine Folie durchstrahlen und so eine Schichtdickenmessung an mehreren Stellen ermöglichen. In der DE 23 55 185 und der EP 0 211 654 wird Laserlicht zur Schichtdickenmessung vorgeschlagen. In der erstgenannten Schrift wird der Laserstrahl nacheinander senkrecht auf eine Bezugsebene und auf das Meßobjekt gerichtet und die Differenzmessung als Maß für die Schichtdicke verwertet. In der letztgenannten Schrift wird die Schichtdicke dadurch bestimmt, daß die zu messende Folie über eine Rolle geführt wird, der gegenüber eine Kante angeordnet ist, so daß der dadurch entstehende Spalt ein Maß für die Schichtdicke ist. In der DE 22 54 910 wird beschrieben, daß eine Langzeitdrift der Meßanordnung dadurch vermieden werden kann, daß das Meßlicht geteilt wird und ein Teil des Lichtes als Vergleichsstrahlengang Lichtschwankungen eliminiert. Aus der DE 29 28 997 ist die Verwendung modulierten Lichtes zur Schichtdickenmessung bekannt.

Die US 3 956 630 beschreibt ein Verfahren zur Messung des Schichtauftrags auf Papierbahnen, bei dem der Beschichtungsmasse eine fluoreszierende Substanz zugesetzt wird, die Bahn mit UV-Licht beleuchtet und das remittierte Fluoreszenzlicht gemessen wird. Eine ähnliche Anordnung, jedoch ohne fluoreszierende Substanz beschreibt das DE-GM 82 02 548.

Die beschriebenen Meßanordnungen sind jedoch nicht für Online-Messungen an Folienbahnen, die in einer Gießvorrichtung mit hoher Geschwindigkeit ab- und aufgerollt werden, geeignet, oder sie sind zu kompliziert oder aber sie geben keine genügende Genauigkeit. Daher bestand die Aufgabe, eine Meßvorrichtung für die Überprüfung von beschichteten oder unbeschichteten flexiblen Schichtträgern zu finden, die

- on-line die Dicke sowie Dickenschwankungen eines Schichtträgers mißt
- gleichzeitig die Oberflächenbeschaffenheit prüft und Gußaussetzer registriert
- über die gesamte Bahnbreite des Schichtträgers Meßergebnisse liefert
- gleichzeitig ausreichend kleine Meßfelder besitzt, um auch Fehler mit kleinen Dimensionen festzustellen
- die Meßergebnisse gleichzeitig (on-line) registriert, so daß ein Fehler lokalisiert werden kann
- auch bei Langzeitmessung konstante Ergebnisse gibt.

Erfindungsgemäß wurde die Aufgabe gelöst mit einer Vorrichtung mit den im kennzeichnenden Teil des Anspruchs 1 genannten Merkmalen. Weitere Einzelheiten der Erfindung gehen aus den Unteransprüchen, der Beschreibung und den Zeichnungen hervor.

Die Erfindung wird nun anhand der Zeichnungen näher erläutert und zwar zeigt

Figur 1    eine schematische Seitenansicht der erfindungsgemäßen Vorrichtung

Figur 2    eine Aufsicht der erfindungsgemäßen Vorrichtung

Figur 3    ein Prinzipschaltbild zur Umwandlung des Stromsignals in ein Spannungssignal

Figur 4    ein Prinzipschaltbild der erfindungsgemäßen Auswerteelektronik bezüglich Nullpunkts- und Verstärkungsregelung

Figur 5    ein Prinzipschaltbild der Signalverarbeitungsstufen für das Reflexionslicht-Signal.

Die erfinderische Idee bestand im wesentlichen darin, mit einem einzigen Fotoempfänger (3) ein an der beschichteten oder unbeschichteten Probe reflektiertes IR-Lichtbündel und ein die Probe an der gleichen Stelle durchleuchtendes IR-Lichtbündel zu messen und, um beide Signale getrennt in einer entsprechenden Auswerteelektronik bewerten zu können, beide Lichtbündel, die von den beiden IR-Lichtquellen stammen, mit unterschiedlicher Frequenz zu modulieren. Auf diese Weise können die Schichtdicke, Schichtdickenschwankungen sowie Begußfehler und Oberflächenfehler bestimmt werden. So sind unter anderem Gußaussetzer auch auf einfache Weise von Oberflächenfehlern wie Abrieb, Deformationen, Falten und so weiter, zu unterscheiden.

1. Optische Anordnung

Als Lichtquellen können verwendet werden:
- Laser, die direkt oder durch Frequenzvervielfältigung Strahlung im IR-Bereich erzeugen, oder
- Glühfadenlampen mit Strahlungsanteilen im IR-Bereich, vorzugsweise von 1 bis 3 $\mu$m. Bei diesen Lichtquellen sind durch Filter kürzerwellige Strahlenanteile auszufiltern.
- LED-Lichtquellen.

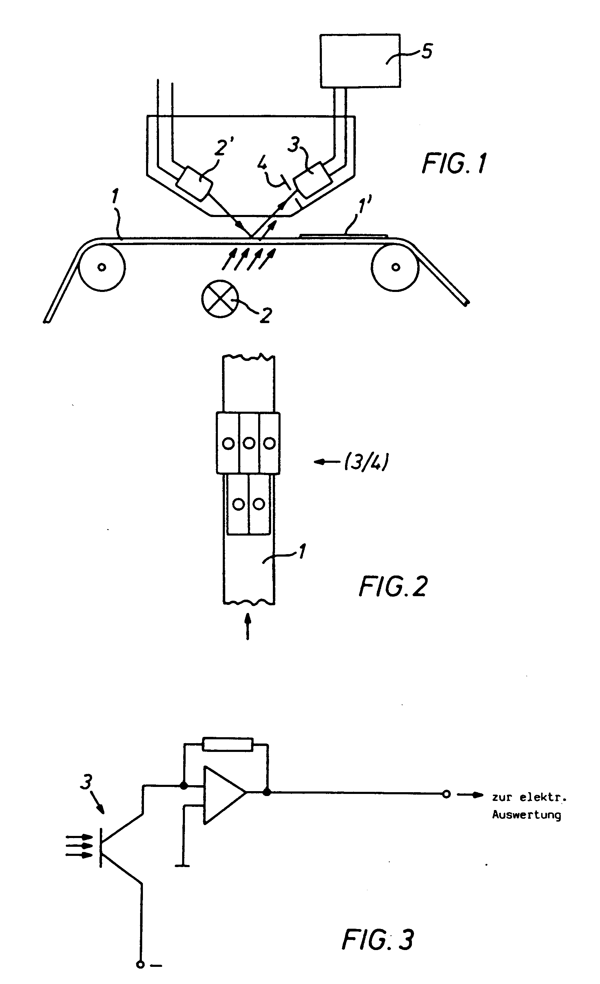

Wie aus Figur 1 zu erkennen, durchstrahlt das Von der Lichtquelle (2) kommende Licht die unbeschichtete oder beschichtete Folie (1), wobei das durchtretende Licht von einem Fotoempfänger (3) aufgefangen wird. Gleichzeitig bestrahlt eine zweite Lichtquelle (2') die Oberfläche des Schichtträgers (1) oder der Schicht (1') schräg unter einem Einfallswinkel von 10° bis 80° und das reflektierte Licht trifft gleichfalls auf den Fotoempfänger (3). Vor diesem ist eine Lochblende (4) angeordnet, welche bewirkt, daß unabhängig von kleinen Abstandsänderungen des Schichtträgers (1) zum Fotoempfänger (3) dieser vom Durchlichtanteil nur einen Teil der homogen beleuchteten und diffus abstrahlenden Fläche sieht. Geringe Abstandsänderungen durch unruhigen Schichtträgerlauf gehen somit nicht in das Meßergebnis ein. Ähnliches gilt für den reflektierten Lichtanteil. Die Fokussierung des Empfängers durch die Lochblende ist kleiner als die homogen beleuchtete Fläche, so daß sich auch hier geringfügige Abstandsänderungen nicht oder nur unwesentlich bemerkbar machen.

Da nun die bevorzugte Aufgabe darin besteht, die Eigenschaften einer in der Gießvorrichtung laufenden Folienbahn über die gesamte Breite on-line zu messen, können entweder Einzelanordnungen von punktförmigen Lichtquellen (2, 2') und Empfängern oder bevorzugt als Lichtquelle (2) eine röhrenförmige Glühfadenlampe, welche quer zur Bahnlaufrichtung angeordnet ist, verwendet werden, so daß die gesamte Bahnbreite von dieser Lampe von oben oder von unten durchstrahlt wird. Das Licht kann durch Reflektoren oder zentrische Linsen parallel oder konvergent auf die Folienbahn gerichtet werden, so daß auf diese Weise die Folie über die gesamte Bahnbreite beleuchtet wird. In diesem Fall wird der durchtretende Lichtstrom von einer Anzahl Fotoempfänger, welche auf der entgegengesetzten Seite der Folie angeordnet sind, aufgefangen. Die Anzahl der Fotoempfänger bestimmt die Abtastdichte, die bis zur lückenlosen Erfassung der gesamten Bahnbreite der Folie ausgedehnt werden kann. Das auf der Schichtoberseite reflektierte Licht stammt vorzugsweise aus LED-Zellen (2'). Die Figur 2 zeigt eine zweckmäßige Anordnung der Lichtquellen beziehungsweise Lochblenden und Fotoempfänger, dabei sind zwei Lagen Fotoempfänger hintereinander in Laufrichtung der Folie jeweils gegeneinander versetzt angeordnet. Lichtquelle (2') (LED) und Fotoempfänger sind als fertiges Bauteil auf dem Markt erhältlich.

Beide Lichtquellen sind frequenzmoduliert, diese Maßnahme ist notwendig, um durch Ausfilterung der modulierten Wellenlänge im Elektronikteil nur das Nutzsignal und keine Störanteile durch Raumlicht und so weiter zu erhalten. Die Modulation kann mechanisch, optisch oder elektrisch mit Mitteln, die aus dem Stand der Technik bekannt sind, erfolgen. Die Modulationsfrequenz wird durch den Frequenzgang des Fotoempfängers gegeben, wobei 100 kHz ohne weiteres zu erreichen sind. Um, was erfindungswesentlich ist, die durch das reflektierte beziehungsweise durchgehende Licht gegebenen Signale getrennt bewerten zu können, werden beide Lichtquellen (2, 2') mit unterschiedlicher Frequenz moduliert und in einer später noch zu erläuternden Auswerteelektronik getrennt bewertet. Von der Höhe der Modulationsfrequenz und der Laufgeschwindigkeit der Folie (moderne Gießverfahren werden mit Geschwindigkeiten größer als 1,5 m/sek betrieben) hängt die Ortsauflösung in Laufrichtung ab. So beträgt die Auflösung bei einer Gießgeschwindigkeit von 5 m/sek und einer Modulationsfrequenz von 100 kHz.25 $\mu$m.

Die Wellenlängenverteilung des IR-Lichtes ist so zu wählen, daß je nach Höhe der Absorption des Schichtträgers sowie der daraufgegossenen Schicht bei Dickenschwankungen deutliche Meßwertänderungen resultieren. Dies ist beispielsweise bei einer Polyethylenterephthalat-Folie und darauf gegossener magnetischer Schicht je nach magnetischem Pigment (Metallpulver, Chromdioxid, Magnetit oder $\gamma$-$Fe_2O_3$) bei einer Wellenlänge von 1 bis 3 $\mu$m gegeben.

Dabei braucht andererseits keine zu starke Erwärmung der Folie durch die durchstrahlende Lichtquelle (2) befürchtet zu werden, da der Gleichlichtanteil der Lichtquelle (2') den Arbeitspunkt des Fotoempfängers (3) vorgibt. Dieser Anteil, der erheblich zur Schichtträgererwärmung beitrüge, kann für das Signal aus der Lichtquelle (2) entfallen. Lichtquelle (2) kann den minimal möglichen Gleichlichtanteil besitzen. Das sekundärseitig ankommende modulierte Durchlichtsignal wird zum arbeitspunktbestimmten Reflexionssignal addiert.

## 2. Signalauswertung

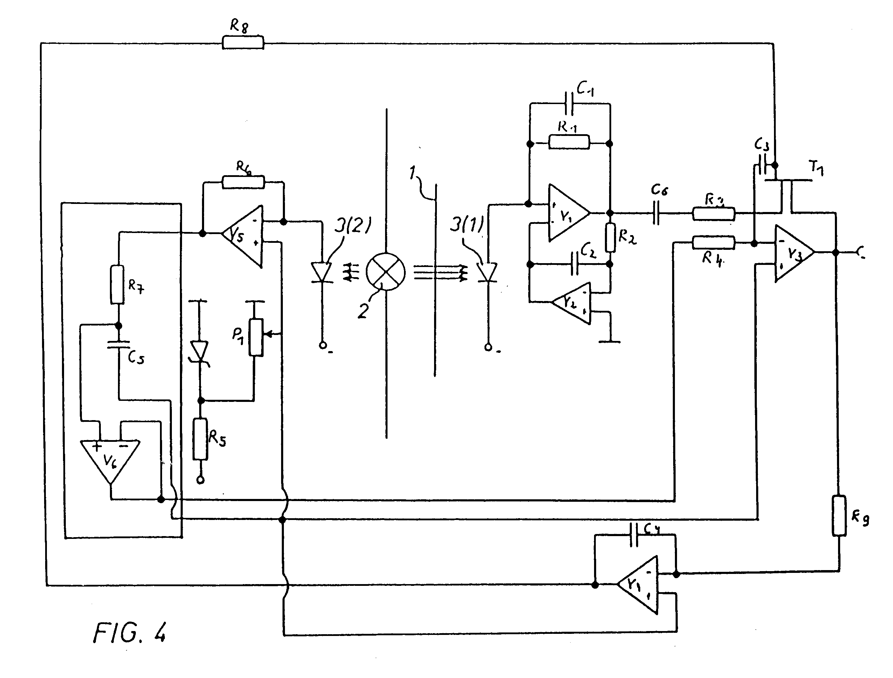

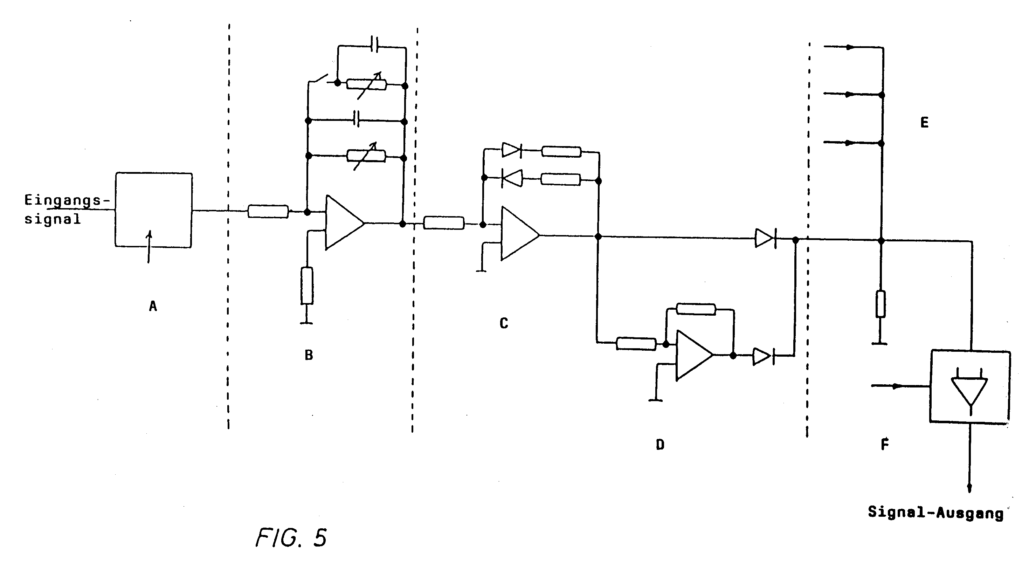

Wie bereits ausgeführt, wird der Durchlicht- und der Reflektionslichtanteil getrennt bewertet. Die elektronische Auswertung des vom Empfänger (3) aufgenommenen Signals ist im wesentlichen in den Figuren 3 bis 5 dargestellt und verläuft auch im wesentlichen analog zu der Auswertung gemäß der korrespondierenden Anmeldung EP-A-0 304 793, veröffentlicht am 1.3.89. Zunächst wird (Figur 3) das in Empfänger (3) entstandene Stromsignal in ein Spannungssignal umgewandelt, welches anschließend in einem Spannungsverstärker verstärkt wird. Dabei können langzeitige Lichtschwankungen der Lichtquelle, wie in Figur 4 dargestellt, durch eine entsprechende Schaltung ausgeglichen werden. Nähere Einzelheiten sind ebenfalls der korrespondierenden Anmeldung, EP-A-0 304 793, zu entnehmen. Das Ausgangssignal wird nun auf zwei parallele elektronische Filter geleitet, von denen in Figur 5 ein Filter A dargestellt ist. Diese Filter sind auf die jeweilige Modulationsfrequenz des durchgehenden beziehungsweise reflektierten Lichtes abgestimmt, so daß auf diese Weise eine getrennte Bewertung möglich ist. Die weitere Signalverarbeitung ist in Figur 5 lediglich für den Fall des durchgehenden Lichtes dargestellt, wobei nach dem Filter eine Empfindlichkeitsbereichseinstellung B vorgesehen ist, danach eine Gleichrichterstufe C, eine Impedanzstufe D sowie eine Logarithmierstufe. Das logarithmierte Signal ist, wie in der bereits erwähnten korrespondierenden Anmeldung, erläutert, ein Maß für die Schichtdicke der begossenen beziehungsweise unbegossenen Folie. Der Anteil des reflektierten Lichtes wird ähnlich bewertet, jedoch ist die Logarithmierstufe entbehrlich.

Die erhaltenen Meßwerte liegen für alle Meßspuren gleichzeitig vor. Je nach gewünschter Breitenauflösung können sie zu mehr oder minder kleinen Gruppen zusammengefaßt werden Die Zusammenfassung zu Gruppen kann wie aus Figur 5 (Gleichrichterschaltung C, Impedanzstufe D und analoge Verknüpfung E) ersichtlich ist, erfolgen. Die zusammengefaßten Signale werden in einer Komparatorstufe E bewertet. Anschließend übernimmt ein Prozessor die Auswertung. Die Auswertung kann entweder als formatierter Fehlerausdruck erfolgen, oder in Form von Regelsignalen einem Regelprozeß zugeführt oder zur statischen Weiterverarbeitung an andere Rechner gegeben werden. Das Verfahren ist so wie oben dargestellt als prinzipielle Lösung zu sehen. Je nach Einsatzzweck ist es zu spezifizieren. Die Spezifikation erfolgt durch unterschiedliche Wahl der Lichtwellenlängen (kann unterschiedlich sein zwischen Durch- und Reflexionslicht) oder durch unterschiedliche Vorgabe der Schichtdicke oder der Schichtträgerdicke als Konstante und durch typspezifische Kalibriergrößen.

Wenn sich zum Beispiel für ein bestimmtes Material der Durchlichtanteil ändert, während der Reflexlichtanteil völlig oder fast ungeändert bleibt, so zeigt dies eine Dickenschwankung des Schichtträgers oder der darauf gegossenen Schicht an. Um nun zu differenzieren, ob eine Schwankung der Dicke des Trägers oder der darauf gegossenen Schicht vorliegt, kann beispielsweise der gemessene Wert des durchgelassenen Lichtes in Beziehung gesetzt werden zu dem gemäß der korrespondierenden Anmeldung EP-A-0 304 793 erhaltenen Wert, der direkt der Schichtdicke des unbegossenen Trägers proportional ist. Durch Differenzbildung beider Werte nach vorangegangener Kalibrierung der Vorrichtung und Zuordnung der Meßorte kann so geklärt werden, ob ein Beschichtungsfehler vorliegt oder ob sich lediglich die Dicke des Trägers geändert hat. Gußaussetzer unterscheiden sich aufgrund der totalen Durchlässigkeit durch ihre Signalhöhe. Sie sind durch den Einsatz eines weiteren Komparators leicht zu trennen.

Ändert sich umgekehrt der Durchlichtanteil nicht oder wenig, während der Reflexlichtanteil deutlich schwankt, so zeigt dies Oberflächenfehler wie Kratzer oder Abriebteilchen an. Es ist ersichtlich, daß eine lückenlose Erkennung und Zuordnung aller vorkommenden Beschichtungsfehler ermöglicht wird.

Die Erfindung ist auf Überprüfung aller möglichen infrage kommenden Schichtträger wie Papier oder transparente Schichtträger anwendbar, auf welche fotografische oder magnetische oder andere Schichtzusammensetzungen gegossen worden sein können.

## Patentansprüche

1. Vorrichtung zur Überprüfung unbeschichteter oder beschichteter Schichtträger auf Oberflächen- und/oder Beschichtungsfehler mit opto-elektronischen Mitteln, enthaltend
   - eine erste Infrarot-Lichtquelle (2), welche an einer ersten Seite des im Verwendungsfall überprüften Schichtträgers (1) angeordnet ist zur Durchstrahlung des Schichtträgers, wobei bei der Überprüfung eines beschichteten Schichtträgers (1) die erste Seite die unbeschichtete Seite sein soll,
   - eine zweite Infrarot-Lichtquelle (2'), welche auf der zweiten, entgegengesetzten Seite des Schichtträgers (1) vorgesehen ist zur Beleuchtung der Oberfläche des Schichtträgers (1), wobei das von den beiden Lichtquellen ausgehende Licht mit unterschiedlicher Frequenz modulierbar ist, und wobei bei der Überprüfung eines beschichteten Schichtträgers die zweite Seite die beschichtete Seite sein soll,

- einen Fotoempfänger (3), welcher auf der zweiten Seite des Schichtträgers (1) angeordnet ist zur Registrierung des vom Schichtträger reflektierten Lichtes der zweiten Infrarot-Lichtquelle (2') sowie des vom Schichtträger an der gleichen Stelle durchgelassenen Lichtes der ersten Infrarot-Lichtquelle (2),
- eine zwischen Schichtträger (1) und Fotoempfänger (3) angeordnete Lochblende (4),
- eine Auswerteelektronik (5) zur Umwandlung des im Fotoempfänger (3) entstehenden Stromsignals in ein Spannungssignal, zur Verstärkung des Spannungssignals in einem Spannungsverstärker und zur Einspeisung in zwei parallel zueinander geschaltete elektronische Filter zur getrennten Gleichrichtung der von den beiden Lichtquellen (2,2') stammenden Signale und gegebenenfalls eine Logarithmierstufe zur Verarbeitung des von der ersten Lichtquelle (2) stammenden Signals.

2. Vorrichtung nach Anspruch 1, dadurch gekennzeichnet, daß das von den Lichtquellen (2, 2') ausgehende Infrarotlicht im Wellenlängenbereich von 0,8 - 3 $\mu$m liegt.

3. Vorrichtung nach den Ansprüchen 1 bis 2, dadurch gekennzeichnet, daß die erste Infrarot-Lichtquelle (2), deren Licht den Schichtträger durchdringt, eine röhrenförmige Glühfadenlampe ist, welche senkrecht zur Bewegungsrichtung des Schichtträgers und parallel zur Schichtträgerebene ausrichtbar ist und daß auf der anderen Seite des Schichtträgers parallel zur röhrenförmigen Glühfadenlampe mehrere Fotoempfänger vorhanden sind.

4. Vorrichtung nach den Ansprüchen 1 bis 3, dadurch gekennzeichnet, daß die zweite Infrarot-Lichtquelle (2'), deren Licht an der Oberfläche des Schichtträgers reflektiert wird, eine oder mehrere LED-Zellen sind.

5. Vorrichtung nach den Ansprüchen 1 bis 4, dadurch gekennzeichnet, daß das von den Lichtquellen (2, 2') ausgehende Licht auf elektrischem, optischem oder mechanischem Weg mit einer Frequenz von 0,05 bis 100 kHz moduliert ist.

6. Vorrichtung nach den Ansprüchen 1 bis 5, dadurch gekennzeichnet, daß das im Fotoempfänger (3) entstehende Stromsignal in einen Eingangs-Verstärker einspeisbar ist, welcher zusammen mit einem Integrationsverstärker ein O-Punkt-Regelglied bildet.

7. Vorrichtung nach den Ansprüchen 1 bis 6, dadurch gekennzeichnet, daß weitere Fotoempfänger (3(2)) zum Empfang eines Teiles des von den Lichtquellen (2, 2') ausgehenden Lichtes und zur Einspeisung des in den Empfängern (3(2)) entstehenden Stromsignals in einen Verstärker, zur Ausfilterung der Modulations-Wechselspannungder aus dem Verstärker ausgehenden Signale in einem R-C-Glied und zur Einspeisung in einem Verstärker (V3), welcher als Rückkopplungswiderstände benutzbare Transistoren enthält.

8. Vorrichtung nach den Ansprüchen 1 bis 7, dadurch gekennzeichnet, daß die einzelnen Meßsignale nach Gleichrichtung über analoge Verknüpfungsschaltungen zusammengefaßt beliebige Gruppen bilden zur Auswertung der Signale in Gruppen.

**Claims**

1. A device for checking uncoated or coated bases for surface defects and/or coating defects using opto-electronic means, including
   - a first infrared light source (2), which is disposed on a first side of the base (1) which is being checked in the particular application, to transirradiate the base, the first side being the uncoated side when checking a coated base,
   - a second infrared light source (2'), which is provided, on the second, opposite side of the base (1), to illuminate the surface of the base (1), the light emitted by the two light sources being modulable with differing frequencies, and the second side being the coated side when checking a coated base,
   - a photocell (3) which is disposed on the second side of the base (1) to register that light of the second infrared light source (2') which is reflected by the base as well as that light of the first infrared light source (2) which is transmitted by the base at the same position,
   - a diaphragm (4) disposed between the base (1) and the photocell (3),
   - an electronic evaluation system (5) to convert the current signal generated in the photocell (3) into a voltage signal, to amplify the voltage signal in a voltage amplifier and for feeding into two electronic filters, connected in parallel with one another, for the separate rectification of the signals originating from the two light sources (2, 2') and, if required, a logarithmation stage for processing the signal originating from the first light source (2).

2. A device as claimed in claim 1, wherein the infrared light emitted by the light sources (2, 2') is within the wavelength range from 0.8 to 3μm.

3. A device as claimed in claim 1 or 2, wherein the first infrared light source (2), whose light penetrates through the base, is a tubular incandescent filament lamp, which can be oriented perpendicular to the direction of movement of the base and parallel to the plane of the base, and wherein a plurality of photocells are provided on the other side of the base, parallel to the tubular incandescent filament lamp.

4. A device as claimed in claim 1 or 2 or 3, wherein the second infrared light source (2'), whose light is reflected at the surface of the base, comprises one or more LED cells.

5. A device as claimed in claim 1 or 2 or 3 or 4, wherein the light emitted by the light sources (2, 2') is modulated with a frequency from 0.05 to 100 kHz by electrical optical or mechanical means.

6. A device as claimed in claim 1 or 2 or 3 or 4 or 5, wherein the current signal generated in the photocell (3) can be fed into an input amplifier, which, together with an integrating amplifier, forms a 0-point regulating element.

7. A device as claimed in claim 1 or 2 or 3 or 4 or 5 or 6, wherein further photocells (3(2)) are provided to receive a part of the light emitted by the light sources (2, 2') and to feed in the current signal generated in the cells (3(2)) into an amplifier, to filter out the alternating modulation voltage of the signals emerging from the amplifier in an R-C element and for feeding into an amplifier (V3), which includes transistors which can be used as feedback resistors.

8. A device as claimed in claim 1 or 2 or 3 or 4 or 5 or 6 or 7, wherein after rectification, the individual measurement signals when combined by means of analogue switching circuits form freely selectable groups for the evaluation of the signals in groups.

**Revendications**

1. Dispositif de contrôle de défauts de surface et/ou de revêtement de supports de couche non-revêtus ou revêtus, à l'aide de moyens opto-électroniques, comprenant :
    - une première source infra-rouge (2), disposée près d'une première face du support de couche contrôlé en cas d'utilisation , en vue d'irradier le support de couche, la première face devant être la face non revêtue dans le cas du contrôle d'un support de couche (1) revêtu,
    - une deuxième source lumineuse infrarouge (2'), prévue sur la deuxième face, opposée, du support de couche (1), en vue d'illuminer la surface du support de couche (1), la lumière sortant des deux sources lumineuses étant modulable avec une fréquence variable, et la deuxième face devant être la face revêtue, dans le cas du contrôle d'un support de couche revêtu,
    - un photorécepteur (3), disposé sur la deuxième face du support de couche (1), en vue d'enregistrer la lumière de la deuxième source infrarouge (2') réfléchie par le support de couche ainsi que la lumière de la première source infra-rouge (2) ayant traversé le support de couche, au même endroit,
    - un diaphragme à trous (4), disposé entre le support de couche (1) et le photorécepteur (3),
    - une électronique d'exploitation (5), pour opérer la conversion du signal d'intensité produit dans le photorécepteur (3) en un signal de tension, pour assurer l'amplification du signal de tension dans un amplificateur de tension et pour assurer l'injection dans deux filtres électroniques, mis en circuit en parallèle, en vue d'opérer le redressement séparé des signaux provenant des deux sources lumineuses (2,2') et, le cas échéant, un étage logarithmique destiné au traitement du signal provenant de la première source lumineuse (2).

2. Dispositif selon la revendication 1, caractérisé en ce que la lumière infra-rouge sortant des sources lumineuses (2,2') est située dans la plage de longueur d'onde allant de 0,8 à 3 microns.

3. Dispositif selon les revendications 1 à 2, caractérisé en ce que la première source infra-rouge (2), dont la lumière traverse le support de couche, est une lampe à filament incandescent de forme tubulaire, orientable perpendiculairement à la direction du déplacement du support de couche et parallèlement au plan de ce dernier et en ce que, sur l'autre face du support de couche, sont disposés plusieurs photorécepteurs, parallèlement à la lampe tubulaire à filament incandescent.

4. Dispositif selon les revendications 1 à 3, caractérisé en ce que la deuxième source infrarouge (2'), dont la lumière est réfléchie sur la surface du support de couche, est composée d'une ou plusieurs cellules à diodes électroluminescentes LED.

5. Dispositif selon les revendications 1 à 4, caractérisé en ce que la lumière provenant des sources lumineuses (2,2') est modulée de façon électrique, optique ou mécanique, à fréquence allant de 0,05 à 100 kHz.

6. Dispositif selon les revendications 1 à 5, caractérisé en ce que le signal d'intensité produit dans le photorécepteur (3) est susceptible d'être introduit dans un amplificateur d'entrée, qui forme un régulateur à point zéro, conjointement avec un amplificateur d'intégration.

7. Dispositif selon les revendications 1 à 6, caractérisé en ce que sont prévus d'autres photorécepteurs (3(2)) destinés à la réception d'une partie de la lumière sortant des sources lumineuses (2,2') et à l'injection dans un amplificateur du signal d'intensité produit dans les récepteurs (3(2)), à l'élimination par filtrage, dans un composant de type R-C, de la tension alternative de modulation des signaux sortant de l'amplificateur, et à l'introduction dans un amplificateur (V3), qui contient des transistors utilisables comme résistances de couplage de réaction.

8. Dispositif selon les revendications 1 à 7, caractérisé en ce que les différents signaux de mesure forment, après redressement, des groupes composés à volonté, par l'intermédiaire de circuits de combinaison analogique, en vue de l'exploitation des signaux en groupes.

FIG.1

← (3/4)

FIG.2

zur elektr.
Auswertung

FIG. 3

FIG. 4

EP 0 304 795 B1

FIG. 5

Eingangs-signal

A

B

C

D

E

F

Signal-Ausgang

EP 0 304 795 B1